# FASCICULE DE BREVET EUROPEEN

(11) **EP 3 455 089 B1**
(45) Date de publication et mention de la délivrance du brevet: **23.06.2021**
(21) Numéro de dépôt: 17727286.1
(22) Date de dépôt: 10.05.2017
(51) Int. Cl.: B60C 9/20, B60C 11/03, B60C 9/00, B60C 9/22, B60C 11/00

(54) **PNEUMATIQUE À COUCHES DE TRAVAIL COMPRENANT DES MONOFILAMENTS ET À BANDE DE ROULEMENT RAINURÉE**
LUFTREIFEN MIT ARBEITSSCHICHTEN AUS MONOFILAMENTEN UND EINER REIFENLAUFFLÄCHE MIT RILLEN
PNEUMATIC TYRE, HAVING WORKING LAYERS COMPRISING MONOFILAMENTS AND A TYRE TREAD WITH GROOVES

(30) Priorité: 10.05.2016 FR 1654145
(43) Date de publication de la demande: 20.03.2019
(73) Titulaire: Compagnie Générale des Etablissements Michelin, 63000 Clermont-Ferrand (FR)
(72) Inventeur: BONNET, Aymeric, 63040 CLERMONT-FERRAND CEDEX 9 (FR); MOREL-JEAN, Jacques, 63040 CLERMONT-FERRAND CEDEX 9 (FR); DEROBERT-MAZURE, Jean-Charles, 63040 CLERMONT-FERRAND CEDEX 9 (FR)
(74) Mandataire: Millanvois, Patrick Jacques Jean
(86) Numéro de dépôt international: PCT/FR2017/051108
(87) Numéro de publication internationale: WO 2017/194874

(56) Documents cités:
- EP-A1- 0 402 303
- EP-A1- 0 488 734
- EP-A2- 2 815 893
- WO-A1-2015/014574

## Description

### DOMAINE DE L'INVENTION

La présente invention concerne un pneumatique de véhicule de tourisme et plus particulièrement le sommet d'un tel pneumatique.

Il est possible pour le fabricant de préconiser un sens de rotation pour le pneumatique dans l'objectif d'optimiser ses performances, notamment en adhérence. Ce sens de rotation est appelé sens de rotation préconisé. Pour indiquer le sens de rotation préconisé, le fabricant inscrit par moulage sur le flanc du pneumatique une flèche indiquant ce sens de rotation. L'utilisateur positionne préférentiellement tous ses pneumatiques tels que la rotation des pneumatiques suivant le sens de rotation préconisé fasse se déplacer le véhicule en marche avant, nommée direction d'avancement.

Dans le présent document, selon la notation usuelle, tout couple de lettre en gras désigne un vecteur.

Un pneumatique ayant une géométrie de révolution par rapport à un axe de rotation **YY',** la géométrie du pneumatique est généralement décrite dans un repère cylindrique direct (0, **XX', YY', ZZ'**). L'architecture du pneumatique est décrite dans un plan méridien (0', **YY', ZZ'**) contenant l'axe de rotation du pneumatique. Pour un plan méridien donné, les directions radiale **(ZZ'),** axiale **(YY')** et circonférentielle **(XX')** désignent respectivement les directions perpendiculaire à l'axe de rotation du pneumatique dans le plan médian considéré, parallèle à l'axe de rotation du pneumatique et perpendiculaire au plan méridien. O, le centre du repère, est l'intersection de l'axe de rotation et du plan circonférentiel médian dit plan équateur divisant le pneumatique en deux tores sensiblement symétriques, le pneumatique pouvant présenter des dissymétries de bande de roulement, d'architecture liées à la précision de fabrication ou au dimensionnement. Dans le repère tel qu'utilisé dans la suite de la description, le vecteur **XX'** est toujours dans le sens de rotation préconisé et **ZZ'** est de sens centrifuge. On déduit des sens prédéfinis de **XX'** et **ZZ',** le sens du vecteur **YY'** de manière que le repère (0, **XX', YY', ZZ'**) soit direct. Le demi tore situé dans l'espace des coordonnées axiales **YY'** positives dans ce repère (O, **XX', YY', ZZ'**) est appelé demi tore gauche ou partie gauche (PG). Le demi tore situé dans l'espace des coordonnées axiales Y négatives est appelé demi tore droit ou partie droite (PD).

Dans ce qui suit, les expressions « radialement intérieur à» et « radialement extérieur à» signifient respectivement « plus proche de l'axe de rotation du pneumatique, selon la direction radiale, que » et « plus éloigné de l'axe de rotation du pneumatique, selon la direction radiale, que ». Les expressions « axialement intérieur à» et « axialement extérieur à» signifient respectivement « plus proche du plan équatorial, selon la direction axiale, que » et « plus éloigné du plan équatorial, selon la direction axiale, que ». Une « distance radiale » est une distance par rapport à l'axe de rotation du pneumatique, et une « distance axiale » est une distance par rapport au plan équatorial du pneumatique. Une « épaisseur radiale » est mesurée selon la direction radiale, et une « largeur axiale » est mesurée selon la direction axiale.

Un pneumatique comprend un sommet comprenant une bande roulement destinée à venir en contact avec le sol par l'intermédiaire d'une surface de roulement dont la partie en contact avec le sol est désignée par comme l'aire de contact. Un pneumatique comprend également deux bourrelets destinés à venir en contact avec une jante et deux flancs reliant le sommet aux bourrelets. En outre, un pneumatique comprend une armature de carcasse comprenant au moins une couche de carcasse, radialement intérieure au sommet et reliant les deux bourrelets.

La bande de roulement d'un pneumatique est délimitée, selon la direction radiale, par deux surfaces circonférentielles dont la plus radialement extérieure est appelée surface de roulement et dont la plus radialement intérieure est appelée surface de fond de sculpture. De plus, la bande de roulement d'un pneumatique est délimitée, selon la direction axiale, par deux surfaces latérales. La bande de roulement est en outre constituée par un ou plusieurs mélanges caoutchouteux. L'expression « mélange caoutchouteux » désigne une composition de caoutchouc comportant au moins un élastomère et une charge.

Le sommet comprend au moins une armature de sommet radialement intérieure à la bande de roulement. L'armature de sommet comprend au moins une armature de travail comprenant au moins une couche de travail composée d'éléments de renforcement, continus, parallèles entre eux formant, avec la direction circonférentielle, un angle compris entre 15° et 50°. L'armature de sommet peut également comprendre une armature de frettage comprenant au moins une couche de frettage composée d'éléments de renforcement formant, avec la direction circonférentielle, un angle compris entre 0° et 10°, l'armature de frettage étant le plus souvent mais pas obligatoirement radialement extérieure aux couches de travail. Chaque élément de renforcement possède deux extrémités qui sont les points les plus axialement extérieurs de l'élément de renforcement.

Dans un pneumatique à sens de rotation préconisé par le fabricant, monté conformément aux préconisations du fabricant, en rotation selon cette direction, un élément de renforcement d'une couche de travail, entre dans l'aire de contact toujours selon la même extrémité, appelé extrémité entrante E1 et sort de l'aire de contact toujours selon la même extrémité sortante E2. Si l'extrémité sortante E2 d'un élément de renforcement d'une couche de travail, est dans le demi tore gauche et son extrémité entrante E1 dans le demi tore droit, alors la couche de travail est dite à droite. Inversement si l'extrémité sortante E2 est dans le demi tore droit et l'extrémité entrante E1 dans le demi tore gauche, alors la couche de travail est dite à gauche. Dans un repère orienté dans le sens trigonométrique défini précédemment (0, **XX', YY', ZZ**'), pour une couche de travail à gauche, l'angle **(XX'** ; **E2E1)** entre l'axe circonférentiel et un élément de renforcement est positif. Pour une couche de travail à droite l'angle **(XX' ; E2E1)** entre l'axe circonférentiel et un élément de renforcement est négatif.

Afin d'obtenir des performances en adhérence sur sol mouillé, des découpures sont disposées dans la bande de roulement. Une découpure désigne soit un puits, soit une rainure, soit une incision, soit un sillon circonférentiel et forme un espace débouchant sur la surface de roulement. Un puits a, au niveau de la surface de roulement, une section débouchante généralement sensiblement polygonale ou circulaire. Une incision ou une rainure a, au niveau de la surface de roulement, une section débouchante ayant deux dimensions principales caractéristiques : une largeur W et une longueur Lo, telle que la longueur Lo est au moins égale à 2 fois la largeur W. Une incision ou une rainure est donc délimitée par au moins deux faces latérales principales déterminant sa longueur Lo et reliées par une face de fond, les deux faces latérales principales étant distantes l'une de l'autre d'une distance non nulle, dite largeur W de l'incision ou de la rainure.

Par définition, une incision ou une rainure qui est délimitée par :
- uniquement deux faces latérales principales, est dite débouchante,
- par trois faces latérales, dont deux principales déterminant la longueur de la découpure, est dite borgne,
- par quatre faces latérales, dont deux principales déterminant la longueur de la découpure, est dite aveugle.

La différence entre une incision et une rainure est la valeur prise par la distance moyenne séparant les deux faces latérales principales de la découpure, à savoir sa largeur W. Dans le cas d'une incision, cette distance est appropriée pour permettre la mise en contact des faces latérales principales en vis-à-vis lors du passage de l'incision dans le contact avec la chaussée. Dans le cas d'une rainure, les faces latérales principales de cette rainure ne peuvent pas venir en contact l'une contre l'autre dans les conditions usuelles de roulage. Cette distance pour une incision est généralement pour les pneumatiques de véhicule de tourisme au plus égale à 1 millimètre (mm). Un sillon circonférentiel est une découpure de direction sensiblement circonférentielle sensiblement continue sur toute la circonférence du pneumatique.

Plus précisément, la largeur W est la distance moyenne, déterminée sur la longueur de la découpure et sur une portion radiale de la découpure comprise entre une première surface circonférentielle, radialement intérieure à la surface de roulement à une distance radiale de 1 mm, et une deuxième surface circonférentielle, radialement extérieure à la surface de fond à une distance radiale de 1 mm, afin d'éviter tout problème de mesure lié au raccordement des deux faces latérales principales avec la surface de roulement et la surface de fond.

La profondeur de la découpure est la distance radiale maximale entre la surface de roulement et le fond de la découpure. La valeur maximale des profondeurs des découpures est nommée profondeur de sculpture D. La surface de fond de sculpture, ou surface de fond, est définie comme la surface translatée de la surface de roulement radialement vers l'intérieur d'une distance radiale égale à la profondeur de sculpture.

### ETAT DE LA TECHNIQUE

Dans le contexte actuel de développement durable, l'économie de ressources et donc de matières premières est un des objectifs majeurs des industriels. Pour les pneumatiques de véhicule de tourisme, une des voies de recherche pour atteindre cet objectif, consiste à remplacer les câbles métalliques habituellement utilisés comme éléments de renforcement de différentes couches de l'armature de sommet par des fils unitaires ou monofilaments tels que décrits dans le document EP 0043563 dans lequel ce type d'éléments de renforcement est utilisé dans un double objectif de gain de masse et de résistance au roulement.

Cependant l'utilisation de ce type d'éléments de renforcement présente l'inconvénient d'entraîner le flambement en compression de ces monofilaments amenant une endurance insuffisante du pneumatique comme le décrit le document EP2537686**.** Ainsi que le décrit ce même document, l'homme de l'art propose une disposition particulière des différentes couches de l'armature de sommet et une qualité spécifique des matériaux composant les éléments de renforcement de l'armature de sommet pour résoudre ce problème.

Une analyse du phénomène physique montre que le flambage des monofilaments a lieu dans les parties les plus axialement extérieures de la bande de roulement sous les rainures comme le mentionne le document JP 2012071791**.** Cette zone du pneumatique a comme particularité d'être soumise à des efforts de compression élevés dans les trajectoires courbes du véhicule. La résistance au flambement des monofilaments dépend de la géométrie des rainures, montrant ainsi l'influence étonnante de la sculpture sur l'endurance des monofilaments.

On connait d'autres pneumatiques des documents EP0488734, EP0402303, WO2015014574 et EP2815893.

### EXPOSE DE L'INVENTION

L'objectif principal de la présente invention est donc d'augmenter l'endurance d'un pneumatique dont les éléments de renforcement des couches de travail sont composés de monofilaments par la conception d'une sculpture de la bande de roulement adaptée au sens de rotation préconisé par le fabricant.

Cet objectif est atteint par un pneumatique pour véhicule de tourisme, destiné à être monté sur une jante selon un sens de rotation (SR) préconisé orientant une direction circonférentielle **(XX'),** comprenant :
- par rapport à la direction circonférentielle **(XX')** orientée selon le sens de rotation préconisé (SR), une partie gauche (PG) et une partie droite (PD) s'étendant axialement et symétriquement à partir d'un plan circonférentiel médian (XX', ZZ'), passant par le milieu d'une bande de roulement du pneumatique, destinée à entrer en contact avec un sol par l'intermédiaire d'une surface de roulement, et perpendiculaire à un axe de rotation du pneumatique **(YY'),**
- la bande de roulement comprenant deux portions axialement extérieures, respectivement appartenant à la partie gauche (PG) et la partie droite (PD) du pneumatique, ayant respectivement une largeur axiale (LG, LD) au plus égale à 0.3 fois la largeur axiale LT de la bande de roulement,
- au moins une portion axialement extérieure de la bande de roulement comprenant des rainures axialement extérieures, une rainure axialement extérieure formant un espace débouchant sur la surface de roulement et étant délimitée par au moins deux faces latérales principales reliées par une face de fond,
- au moins une rainure axialement extérieure dite majeure ayant une largeur W, définie par la distance entre les deux faces latérales principales, au moins égale à 1 mm, une profondeur D, définie par la distance radiale maximale entre la surface de roulement et la face de fond, au moins égale à 5 mm, et un profil moyen linéaire L, ayant un point (a) le plus axialement intérieur et un point (b) le plus axialement extérieur, définissant le vecteur **(ab)** du profil moyen linéaire L,
- le pneumatique comprenant en outre une armature de sommet radialement intérieure à la bande de roulement, comprenant une armature de travail et une armature de frettage,
- l'armature de travail comprenant au moins deux couches de travail, comprenant chacune des éléments de renforcement enrobés par un matériau élastomérique, parallèles entre eux et formant respectivement avec une direction circonférentielle **(XX')** du pneumatique, deux angles orientés AA et AB dans le sens trigonométrique au moins égal à 20° et au plus égal à 50° en valeur absolue et de signe opposé d'une couche à la suivante,
- les dits éléments de renforcement de chaque couche de travail étant constitués par des fils métalliques unitaires ou monofilaments ayant une section S dont la plus petite dimension est au moins égale à 0.20 mm et au plus égale à 0.5 mm, une résistance à la rupture Rm
- la densité d de monofilaments de chaque couche de travail étant au moins égale à 100 fils par dm et au plus égale à 200 fils par dm,
- l'armature de frettage comprenant au moins une couche de frettage comprenant des éléments de renforcement, parallèles entre eux et formant, avec la direction circonférentielle **(XX')** du pneumatique, un angle au plus égal à 10° en valeur absolue,
- le vecteur **(ab)** de tout profil linéaire moyen L de toute rainure majeure axialement extérieure de la portion gauche axialement extérieure de la bande de roulement formant, avec la direction circonférentielle **(XX')** du pneumatique, un angle orienté C **(XX'** ; **ab)** au moins égal à (85°+ (AA+AB)/2),
- le vecteur **(ab)** de tout profil linéaire moyen L de toute rainure majeure axialement extérieure de la portion droite axialement extérieure de la bande de roulement formant, avec la direction circonférentielle **(XX')** du pneumatique, un angle orienté C' **(XX'** ; **ab)** au plus égal à (- 85°+ (AA+AB)/2)),
- la résistance à rupture Rc de chaque couche de travail est au moins égale à 30 000 N/dm, Rc étant définie par : Rc= Rm*S*d, où Rm est la résistance à la rupture en traction des monofilaments en MPa, S la section des monofilaments en mm² et d la densité de monofilaments de la couche de travail considérée, en nombre de monofilaments par dm.

AA et AB sont indifféremment les angles orientés formés par la direction **XX'** et les éléments de renforcement des couches de travail, c'est-à-dire les angles **(XX'; E2E1),** de la couche de travail à droite et de la couche de travail à gauche. AA et AB sont de signes opposés. Dans de nombreux pneumatique leurs valeurs absolues sont égales.

L'intersection de la surface de roulement et des faces latérales principales d'une rainure détermine les profils principaux de la rainure. Le profil linéaire moyen d'une rainure est calculé par interpolation linaire de ces profils principaux. L'interpolation linéaire est faite selon la direction axiale sur la portion la plus axialement extérieure de la bande de roulement considérée, la rainure pouvant être de forme quelconque, courbe, sinusoïdale, en zigzag. Les profils principaux des rainures sont habituellement intuitivement repérables car l'intersection entre la surface de roulement et les faces latérales des rainures est une courbe. Pour les pneumatiques dont la surface de roulement et les faces latérales des rainures se rejoignent continûment, les profils des rainures sont déterminés par l'intersection des faces latérales principales des rainures et la translation radiale de la surface de roulement de -0.5mm.

Usuellement, les profils principaux de la rainure sont sensiblement de même forme et distants l'un de l'autre de la largeur W de la rainure.

Pour les rainures de forme complexe, on entend par largeur de la rainure la distance moyenne des faces latérales principales, moyennée sur la longueur curviligne moyenne des profils principaux de la rainure.

Du point de vue du fonctionnement mécanique, le flambement d'un élément de renforcement se produit en compression. Il ne se produit que radialement à l'intérieur des portions les plus axialement extérieures de la bande de roulement car c'est dans cette zone que les efforts de compression sont les plus importants en cas d'effort transversal. Ces portions les plus axialement extérieures ont chacune pour largeur axiale maximale 0.3 fois la largeur axiale totale de la bande de roulement du pneumatique.

Le flambement est un phénomène complexe et instable qui conduit à une rupture par fatigue d'un objet ayant au moins une dimension d'un ordre de grandeur inférieur à une dimension principale, comme les poutres ou les coques. Les monofilaments sont des objets de ce type avec une section très inférieure à leur longueur. Le phénomène commence par une mise en compression du monofilament dans sa dimension principale. Il se poursuit en raison d'une dissymétrie de la géométrie du monofilament, ou de l'existence d'un effort transverse, par une mise en flexion du monofilament, sollicitation très destructrice pour les matériaux métalliques. Ce phénomène complexe est notamment très dépendant des conditions aux limites, de la mobilité de l'élément, de la direction de l'effort appliqué et de la déformation résultante de cet effort. Si cette déformation ne s'effectue pas sensiblement suivant la direction de la dimension principale du monofilament alors le flambement n'aura pas lieu et, dans le cas des monofilaments entourés par la matrice de mélange caoutchouteux des couches de travail d'un pneumatique, l'effort est repris par le cisaillement du mélange caoutchouteux entre les monofilaments.

De plus le flambement des monofilaments des couches de travail ne se produit que sous les rainures axialement extérieures de la bande de roulement car, en absence de rainure axialement extérieure, le matériau caoutchouteux de la bande de roulement radialement extérieur à l'élément de renforcement reprend la majeure partie de l'effort compression. De même les rainures axialement extérieures dont la profondeur est inférieure à 5 mm n'ont pas d'influence sur le flambement des monofilaments. Donc seules les rainures axialement extérieures dites majeures doivent être soumises à des règles de conception particulières lors de l'utilisation de monofilaments dans les couches de travail. Ces rainures majeures axialement extérieures sont en particulier essentielles pour la performance du pneumatique en adhérence sur sol mouillé.

Par ailleurs les rainures axialement extérieures dont la largeur est inférieure à 1 mm, appelées aussi incisions, se ferment dans l'aire de contact et donc protègent les monofilaments du flambement. Pour les rainures non axialement extérieures, l'effort de compression en cas d'effort transversal sur le pneumatique est trop faible pour provoquer le flambement. Par ailleurs il est courant sur les pneumatiques pour véhicule de tourisme que seules des incisions d'une largeur inférieure à 1 mm soient disposées dans les portions axialement centrales de la bande de roulement.

Dans les directions où aucun espace vide ne permet de déplacement, les efforts de compression vont être repris par le mélange caoutchouteux. Quand une rainure majeure axialement extérieure est présente, celle-ci n'absorbe pas les efforts mais au contraire autorise les déplacements en compression dans la direction perpendiculaire à son profil linéaire moyen. Pour éviter le flambement, il est nécessaire que l'effort de compression ne s'applique pas sur l'élément de renforcement dans la direction de sa dimension principale mais en compression et cisaillement sur le matériau caoutchouteux. Pour cela, il est nécessaire que le profil linéaire moyen des rainures majeures axialement extérieures présentes sur les portions les plus axialement extérieures, chacune ayant une largeur axiale maximale égale à 0.3 fois la largeur axiale de la bande de roulement, ne soit pas perpendiculaire à aucun des monofilaments qui lui sont radialement intérieurs avec une précision angulaire de 10°. Avec une déviation de plus de 10°, la couche de travail considérée reprend les efforts de compression par le cisaillement du matériau caoutchouteux enrobant les monofilaments.

En effet les calculs et les tests montrent qu'une différence de 10° entre l'angle C du profil linéaire moyen d'une rainure majeure axialement extérieure et la perpendiculaire au monofilament est suffisante pour protéger celui-ci du flambement sur la portion considérée de la bande de roulement.

Pour optimiser l'orientation du profil linéaire moyen des rainures majeures axialement extérieures, c'est-à-dire les éloigner le plus possible de chacune des perpendiculaires aux éléments de renforcement des deux couches de travail tout en préservant leur fonction d'adhérence, c'est-à-dire ne pas transformer les rainures en sillons circonférentiels, il est nécessaire de les orienter suivant l'angle de la bissectrice des deux perpendiculaires à savoir autour de (90°+(AA+AB)/2) mod(180°). Avec un angle de sécurité de 10°, il est possible de concevoir des rainures majeures axialement extérieures conformes aux exigences d'endurance, telles que leur profil linéaire moyen forme un angle avec l'axe circonférentiel appartenant à [90+(AA+AB)/2-30 ; 90+(AA+AB)/2+30] mod(180), conditions invariantes en fonction du sens de rotation du pneumatique.

Une analyse plus fine des conditions de roulage à l'aide de calculs et de tests a permis d'imaginer une solution optimisée basée sur un sens de rotation du pneumatique imposé permettant d'améliorer l'endurance des monofilaments.

Les efforts de compression les plus importants sur la sculpture et donc sur les éléments de renforcement des couches de travail, ont lieu lors des virages à forte accélération transversale. Dans un virage à gauche, la force centrifuge exerce sur le véhicule un effort orienté à droite. Le pneumatique le plus sollicité est celui qui reprend le report de charge, sur le côté avant droit du véhicule. Sur ce pneumatique, la portion la plus sollicitée est celle la plus extérieure au véhicule, c'est-à-dire la portion droite. Et de même pour un virage à droite, le pneumatique le plus sollicité est le pneumatique avant gauche et sur ce pneumatique la portion la plus sollicitée est celle la plus extérieure au véhicule, c'est-à-dire la portion gauche.

Si le fabricant ne préconise aucun sens de roulage, tout demi-tore du pneumatique peut avoir à subir indifféremment les efforts maximaux générés par un virage à droite ou un virage à gauche, puisqu'il est possible de le tourner de 180° sur sa jante et de le positionner sur n'importe quelle roue du véhicule. Dans ce cas la conception de la sculpture doit de prendre en compte l'ensemble des sollicitations possibles et ne permet donc pas une optimisation en fonction des angles de chaque couche de travail.

En revanche, si un pneumatique possède un sens de rotation préconisé, sous réserve que l'utilisateur suive ces préconisations, le pneumatique ne sera pas tourné de 180° sur sa jante par rapport au sens d'avancement usuel du véhicule. Il est alors possible de choisir l'orientation optimale du profil linéaire moyen des rainures majeures axialement extérieures en fonction de la sollicitation la plus pénalisante. Donc pour un pneumatique avec un sens de rotation préconisé, il est possible de choisir l'orientation optimale du profil linéaire moyen des rainures majeures axialement extérieures, par rapport à la bissectrice des éléments de renforcement des deux couches de travail, en fonction de leur position à droite ou à gauche du pneumatique. L'optimisation des rainures de la portion gauche du pneumatique se fera pour des sollicitations résultant d'un virage à droite et inversement.

Pour un virage à gauche, le pneumatique subit au niveau du sommet et donc au niveau des couches de travail, un effort du sol orienté vers la gauche, tandis que cet effort est compensé au niveau de la zone basse du pneumatique en contact avec la jante par un effort vers la droite résultant de la force centrifuge s'appliquant sur le véhicule. En dehors de l'aire de contact de la surface de roulement avec le sol, les efforts sur la bande de roulement sont nuls. Les efforts transversaux augmentent depuis l'entrée de l'aire de contact jusqu'à la sortie ainsi que les moments de flexions associés. Ils sont maximaux avant la zone de glissement, avant la sortie de l'aire de contact.

Pour un virage à gauche, une couche de travail à droite, dont l'extrémité à droite du pneumatique entre dans l'aire de contact avant l'extrémité gauche, est déformée de telle façon que son angle en sortie d'aire de contact où la compression est maximale, s'éloigne de la direction circonférentielle qui est la direction de compression. En revanche pour une couche de travail à gauche, ses éléments de renforcement se déforment pour s'orienter vers la direction circonférentielle qui est la direction de compression. Ce sont donc les éléments de renforcement de la couche de travail à gauche qui sont les plus sollicités en compression et seront les plus sensibles à la fatigue. Il faut donc éviter que le profil linéaire moyen des rainures majeures axialement extérieures de la portion droite du pneumatique ne soit perpendiculaire à la déformée des éléments de renforcement de la couche de travail à gauche. Ce qui implique que l'angle C'entre l'axe circonférentiel (XX') et le vecteur (ab) du profil linéaire moyen des rainures majeures axialement extérieures de la portion droite du pneumatique soit doit être au plus égal à (- 85°+(AA+AB)/2).

Pour un virage à droite, avec un raisonnement analogue, il faut que l'angle C entre l'axe circonférentiel (XX') et le vecteur (ab) du profil linéaire moyen des rainures majeures axialement extérieures de la portion gauche du pneumatique soit au moins égal à (85°+ (AA+AB)/2).

En marche arrière, les véhicules de tourisme ne sont pas prévus pour atteindre de hautes accélérations transversales de sorte que les sollicitations en compression ne génèrent pas de flambement des éléments de renforcement des couches de travail.

Préférentiellement, pour améliorer plus encore l'endurance des éléments de renforcement des couches de travail, il est possible de restreindre davantage l'intervalle admissible pour les angles C et C' des profils linéaires moyens L de toute rainure majeure axialement extérieure des parties droite et gauche du pneumatique et également de prendre en compte, non seulement le critère angulaire sur la couche de travail la plus sollicitée mais également sur la moins sollicitée. Ainsi préférentiellement le vecteur (ab) de tout profil linéaire moyen L de toute rainure majeure axialement extérieure de la portion gauche axialement extérieure de la bande de roulement forme avec la direction circonférentielle **(XX')** du pneumatique, un angle orienté C **(XX'; ab)** au moins égal à (90°+(AA+AB)/2), et au plus égal à (120°+(AA+AB)/2), et le vecteur **(ab)** de tout profil linéaire moyen L de toute rainure majeure axialement extérieure (24) de la portion droite axialement extérieure (22) de la bande de roulement (2) forme, avec la direction circonférentielle **(XX')** du pneumatique, un angle orienté C' **(XX'** ; **ab)** au plus égal à (-90°+(AA+AB)/2)), et au moins égal (-120°+(AA+AB)/2)).

Les deux portions axialement extérieures de la bande de roulement peuvent éventuellement contenir un ou plusieurs sillons circonférentiels pour diminuer le risque d'hydroplanage sur sol mouillé. Pour des pneumatiques de tourisme, ces sillons circonférentiels représentent généralement une faible largeur de l'aire de contact et n'ont pas d'impact connu sur le flambement des monofilaments.

Les rainures majeures peuvent également contenir des protubérances ou pontages, ces pontages pouvant éventuellement contenir une incision de largeur moyenne inférieure à 1 mm.

Les monofilaments peuvent avoir toute forme de section, sachant que les sections oblongues représentent un avantage sur les sections circulaires de même plus petite dimension car leur inertie de flexion et donc leur résistance au flambement sont supérieures. Pour une section circulaire, la plus petite dimension correspond au diamètre de la section. Pour garantir une résistance à rupture en fatigue des monofilaments et la tenue au cisaillement des mélanges caoutchouteux situés entre les filaments, la densité d'éléments de renforcement de chaque couche de travail est au moins égale à 100 fils par dm et au plus égale à 200 fils par dm. Par densité on entend le nombre moyen de monofilaments sur une largeur de couche de travail de 10 cm, cette largeur étant prise perpendiculairement à la direction des monofilaments de la couche de travail considérée. La distance entre des éléments de renforcement consécutifs peut être fixe ou variable. La pose des éléments de renforcement en fabrication peut être effectuée par couche, par bandelette ou de façon unitaire.

Il est avantageux que toute rainure majeure axialement extérieure ait une largeur W au plus égale à 10 mm afin de limiter le volume de creux de la bande de roulement et préserver le potentiel d'usure du pneumatique.

Préférentiellement, toute rainure majeure axialement extérieure a une profondeur D au plus égale à 8 mm. En effet au-delà d'une certaine épaisseur, la bande de roulement devient trop souple et le pneumatique devient moins performant en usure, comportement et résistance au roulement.

Préférentiellement les rainures majeures axialement extérieures sont espacées, selon la direction circonférentielle **(XX')** du pneumatique, d'un pas circonférentiel P au moins égal à 8 mm, pour éviter une trop grande souplesse de la bande de roulement et des pertes de performance en usure et en résistance au roulement. Le pas circonférentiel est la distance circonférentielle moyenne sur la portion la plus axialement extérieure considérée de la bande de roulement entre les profils linéaires moyens de deux rainures majeures axialement extérieures circonférentiellement consécutives. Habituellement, les bandes de roulement des pneumatiques peuvent présenter des pas circonférentiels variables notamment pour limiter le bruit lors du roulage.

Une solution préférée est que les rainures majeures axialement extérieures soient espacées selon la direction circonférentielle **(XX')** du pneumatique, d'un pas circonférentiel P au plus égal à 50 mm pour garantir une bonne adhérence sur sol mouillé.

Il est particulièrement avantageux que la face de fond d'une rainure majeure axialement extérieure soit positionnée radialement à l'extérieur de l'armature de sommet à une distance radiale D1 au moins égale à 1.5 mm. En effet cette quantité minimale de matériaux caoutchouteux permet de protéger le sommet des agressions et des perforations par des obstacles, cailloux, débris quelconques se trouvant sur le sol.

Il est préféré que la distance radiale entre la face de fond des rainures majeures axialement extérieures et les éléments de renforcement les plus radialement extérieurs de l'armature de sommet soit au plus égale à 3.5 mm pour obtenir un pneumatique performant en résistance au roulement.

Préférentiellement au moins une portion axialement extérieure, comprenant des rainures majeures axialement extérieures, comprend des incisions ayant une largeur W1 au plus égale à 1 mm. Pour améliorer l'adhérence sur certains types de sols, notamment des sols verglacés ou enneigés, il est possible de disposer, dans les portions axialement extérieures de la bande de roulement, des incisions de faible largeur sans dégrader l'endurance du pneumatique dont l'armature de travail contient des monofilaments. En effet, lors du passage dans l'aire de contact, les profils principaux de ces incisions viennent en contact entre eux et le matériau caoutchouteux de la bande de roulement reprend alors les efforts de compression. Ces incisions peuvent avoir des largeurs variables dans la direction des profils principaux ou dans leur profondeur tant que leur largeur minimale est au plus égale à 1 mm sur une surface suffisante, par exemple au moins égale à 50 mm².

Il est également possible de disposer des rainures de faible profondeur, inférieure à 5 mm, sans dégrader de manière significative l'endurance du pneumatique mais dans ce cas, la performance notamment d'adhérence sur sol mouillé se dégrade avec l'usure du pneumatique.

Avantageusement les deux portions axialement extérieures de la bande de roulement ont chacune une largeur axiale (LG, LD) au plus égale à 0.2 fois la largeur axiale LT de la bande de roulement.

Il est avantageux que les deux couches de travail soient croisées et les angles des éléments de renforcements respectifs des couches de travail soient égaux en valeur absolue. Ce mode de réalisation présente des avantages en fabrication, en standardisation de produit et donc en coûts de production. Cette égalité des angles est vérifiée aux tolérances de fabrication près à savoir à plus ou moins 2°.

Une solution préférée est que chaque couche de travail comprenne des éléments de renforcement formant, avec la direction circonférentielle (XX') du pneumatique, un angle au moins égal à 22° et au plus égal à 35° en valeur absolue qui constituent un compromis optimal entre les performances de comportement et d'endurance du pneumatique.

Préférentiellement chaque couche de travail comprend des éléments de renforcement constitués par des fils métalliques unitaires ou monofilaments ayant une section S dont la plus petite dimension est au moins égale à 0.3 mm et au plus égale à 0.37 mm qui constituent un optimum pour l'équilibre des performances visées: le gain de masse et l'endurance au flambement des éléments de renforcement des couches de travail.

Les éléments de renforcement des couches de travail peuvent être rectilignes ou non. Ils peuvent être préformés, de forme sinusoïdale, zigzag, ondulée ou suivant une spirale. Les éléments de renforcement des couches de travail sont en acier, de préférence en acier au carbone tel que ceux utilisés dans les câbles de type "steel cords" ; mais il est bien entendu possible d'utiliser d'autres aciers, par exemple des aciers inoxydables, ou d'autres alliages.

Lorsqu'un acier au carbone est utilisé, sa teneur en carbone (% en poids d'acier) est de préférence comprise dans un domaine de 0,8% à 1,2%. L'invention s'applique en particulier à des aciers du type steel cord à très haute résistance "SHT" (" Super High Tensile "), ultra-haute résistance "UHT" ("Ultra High Tensile ") ou "MT" ("Mega Tensile "). Les renforts en acier au carbone ont alors une résistance à la rupture en traction (Rm) qui est de préférence au moins égale à 3000 MPa, plus préférentiellement au moins égale à 3500 MPa. Leur allongement total à la rupture (At), somme de l'allongement élastique et de l'allongement plastique, est de préférence au moins égal à 2,0%. Dans le cas

Pour ce qui concerne les renforts en acier, les mesures de résistance à la rupture notée Rm (en MPa) et d'allongement à la rupture noté At (allongement total en %) sont effectuées en traction selon la norme ISO 6892 de 1984.

L'acier utilisé, qu'il s'agisse en particulier d'un acier au carbone ou d'un acier inoxydable, peut être lui-même revêtu d'une couche métallique améliorant par exemple les propriétés de mise en œuvre du monofilament d'acier, ou les propriétés d'usage du renfort et/ou du pneumatique eux-mêmes, telles que les propriétés d'adhésion, de résistance à la corrosion ou encore de résistance au vieillissement. Selon un mode de réalisation préférentiel, l'acier utilisé est recouvert d'une couche de laiton (alliage Zn-Cu) ou de zinc ; on rappelle que, lors du procédé de fabrication des fils, le revêtement de laiton ou de zinc facilite le tréfilage du fil, ainsi que le collage du fil avec le caoutchouc. Mais les renforts pourraient être recouverts d'une fine couche métallique autre que du laiton ou du zinc, ayant par exemple pour fonction d'améliorer la résistance à la corrosion de ces fils et/ou leur adhésion au caoutchouc, par exemple une fine couche de Co, Ni, Al, d'un alliage de deux ou plus des composés Cu, Zn, Al, Ni, Co, Sn.

Il est avantageux que la densité d'éléments d de renforcement de chaque couche de travail soit au moins égale à 120 fils par dm et au plus égale à 180 fils par dm afin de garantir une endurance améliorée des mélanges caoutchouteux travaillant en cisaillement entre les éléments de renforcement et l'endurance de ces derniers en traction et compression.

Préférentiellement les éléments de renforcement de la au moins une couche de frettage sont en textile de préférence de type polyamide aliphatique, polyamide aromatique, combinaison de polyamide aliphatique et de polyamide aromatique, polytéréphtalate d'éthylène ou rayonne car les matériaux textiles sont particulièrement adaptés à ce type d'usage en raison de leur faible masse et de leur rigidité élevée. La distance entre des éléments de renforcement consécutifs de la couche de frettage ou pas peut être fixe ou variable. La pose des éléments de renforcement en fabrication peut être effectuée par couche, par bandelette ou de façon unitaire.

Il est avantageux que l'armature de frettage soit radialement extérieure à l'armature de travail pour une bonne tenue de cette dernière en endurance.

### BREVE DESCRIPTION DES DESSINS

Les caractéristiques et autres avantages de l'invention seront mieux compris à l'aide des figures 1 à 9, les dites figures n'étant pas représentées à l'échelle mais de façon simplifiée, afin de faciliter la compréhension de l'invention :
- La figure 1 est une vue en perspective représentant un pneumatique ayant un sens de rotation (SR) préconisé.
- la figure 2 représente une partie de pneumatique selon l'invention, en particulier son architecture et sa bande de roulement.
- La figure 3 représente une coupe méridienne du sommet d'un pneumatique selon l'invention et illustre les portions axialement extérieures 22 et 23 de la bande de roulement, ainsi que leurs largeurs axiales respectives LG et LD.
- Les figures 4A et 4B présentent deux types de profils méridiens radialement extérieurs de la bande de roulement d'un pneumatique de tourisme.
- La figure 5 illustre différents types de rainures axialement extérieures 24 possibles.

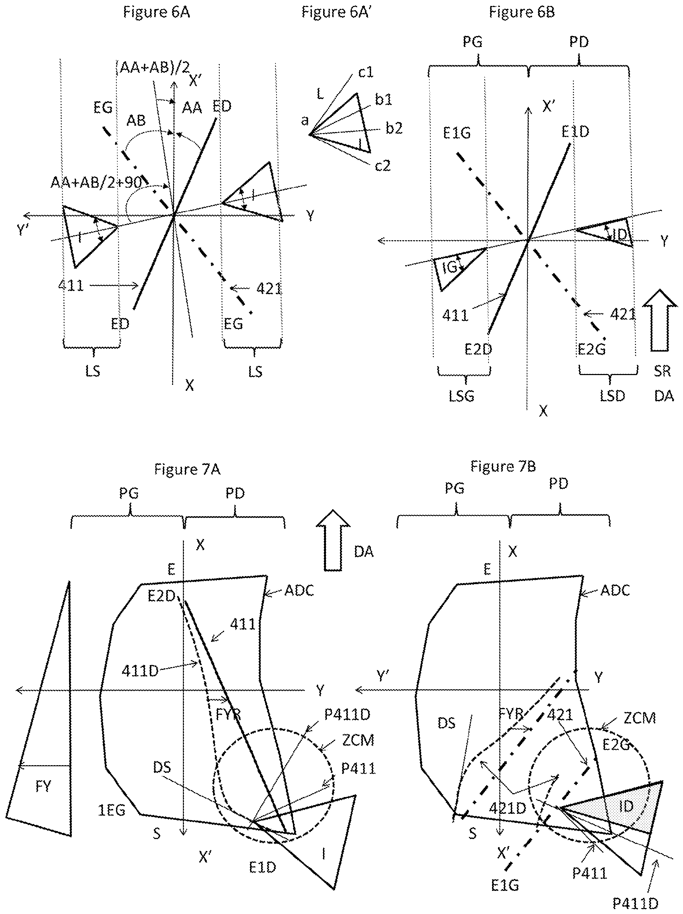

- La figure 6A illustre les intervalles optimaux I de l'angle C entre la direction circonférentielle **XX'** et la direction du profil linéaire moyen L de toute rainure majeure axialement extérieure, [90°+(AA+AB)/2-30 ; 90°+(AA+AB)/2+30] mod(180°) pour un pneumatique sans sens de rotation préconisé. La figure 6B illustre les intervalles optimaux IG et ID respectivement des angles C et C' entre la direction circonférentielle **XX'** et la direction des profils linéaires moyens L de toute rainure majeure axialement extérieure respectivement de la portion gauche PG et de la portion droite PD du pneumatique.
- La figure 7A illustre l'effet d'un virage à gauche sur un élément de renforcement d'une couche de travail à droite dans l'aire de contact et la figure 7B illustre l'effet d'un virage à gauche sur un élément de renforcement d'une couche de travail à gauche dans l'aire de contact.
- La figure 8A illustre un type de sculpture non optimisé par l'invention, et la figure 8B illustre un type de sculpture optimisé par l'invention avec un sens de rotation préconisé.
- Les figures 9A, 9B, 9C illustrent une méthode de détermination des profils des rainures dans le cas d'un réseau de rainures.

### DESCRIPTION DETAILLEE DES DESSINS

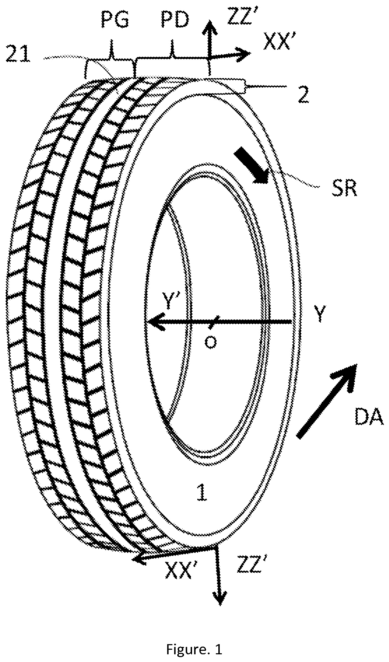

La figure 1 représente une vue en perspective d'un pneumatique (1) ayant une bande de roulement (2) et un sens de rotation (SR) préconisé par le fabricant habituellement représenté par une flèche sur un flanc. En rotation autour de son axe **YY',** selon le sens de rotation (SR), le pneumatique se déplace dans la direction d'avancement (DA). Le repère cylindrique direct (O, **XX', YY', ZZ'**) est choisi tel que le vecteur directeur de la direction circonférentielle XX' est toujours orienté selon le sens de rotation préconisé (SR). Le plan circonférentiel médian du pneumatique **(XX', ZZ'),** passant par le milieu de la bande de roulement et perpendiculaire à l'axe de rotation **YY',** et le vecteur directeur de la direction circonférentielle **XX',** orienté selon le sens de rotation (SR) donnant la direction d'avancement (DA), permettent de déterminer deux demi tores respectivement désignés comme la portion gauche (PG), dont les points ont des coordonnées selon la direction axiale **YY'** positives, et la portion droite (PD) du pneumatique), dont les points ont des coordonnées selon la direction axiale **YY'** négatives. La bande de roulement comprend une surface de roulement (21) destinée à entrer en contact avec le sol. Sont représentés également des repères (O, **XX', YY', ZZ'**) associés à des plans méridiens ayant des positions angulaires différentes autour de l'axe de rotation **YY.**

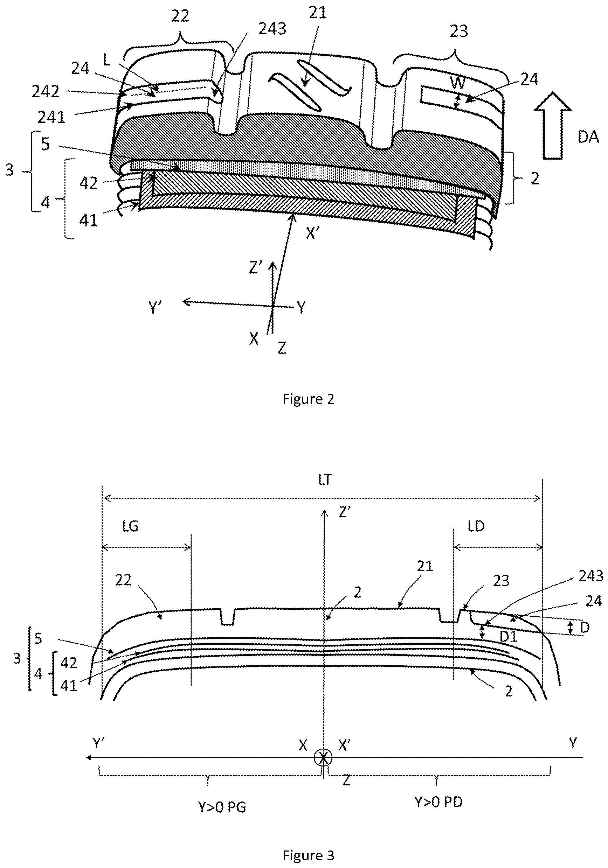

La figure 2 représente une vue en perspective d'une partie du sommet d'un pneumatique. A chaque plan méridien est associé un repère (O, **XX', YY', ZZ'**). Le pneumatique comporte une bande de roulement 2 destinée à entrer en contact avec un sol par l'intermédiaire d'une surface de roulement 21. Dans les portions axialement extérieures respectivement gauche 22 et droite 23 de la bande de roulement, sont disposées des rainures axialement extérieures 24 de largeur W, ayant chacune des profils principaux 241 et 242 et une face de fond 243, et ayant un profil linéaire moyen L. Le pneumatique comprend en outre une armature de sommet 3 comprenant une armature de travail 4 et une armature de frettage 5. L'armature de travail comprend deux couches de travail 41 et 42 comprenant chacune des éléments de renforcement parallèles entre eux, dont l'une est une couche de travail à droite et l'autre une couche de travail à gauche.

La figure 3 représente schématiquement la coupe méridienne du sommet du pneumatique selon l'invention. Elle illustre en particulier les largeurs axiales LG et LD des portions axialement extérieures gauche 22 et droite 23 de la bande de roulement, ainsi que la largeur axiale totale de la bande roulement du pneumatique LT. Sont représentées également la profondeur D d'une rainure axialement extérieure 24 et la distance D1 entre la face de fond 243 d'une rainure axialement extérieure 24 et l'armature de sommet 3 mesurée sur une coupe méridienne du pneumatique. Une coupe méridienne du pneumatique est obtenue par découpage du pneumatique selon deux plans méridiens.

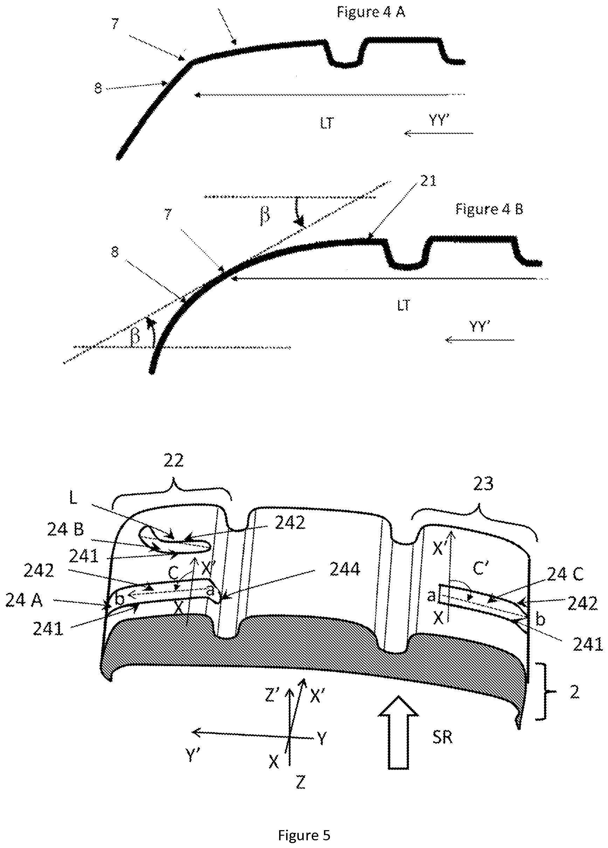

Sur les figures 4A et 4B, on détermine les bords axiaux 7 de la bande de roulement qui permettent de mesurer la largeur axiale de la bande de roulement. Dans la figure 4A où la surface de roulement 21 est sécante avec la surface axiale extérieure du pneumatique 8, le bord axial 7 est trivialement déterminé par l'homme de l'art. Dans la figure 4B où la surface de roulement 21 est continue avec la surface axiale extérieure du pneumatique 8, on trace, sur une coupe méridienne du pneumatique, la tangente à la surface de roulement en tout point de ladite surface de roulement dans la zone de transition vers le flanc. Le premier bord axial 7 est le point pour lequel l'angle β (beta) entre ladite tangente et une direction axiale **YY'** est égal à 30°. Lorsqu'il existe plusieurs points pour lesquels l'angle β entre ladite tangente et une direction axiale **YY'** est égal à 30°, on retient le point radialement le plus à l'extérieur. On procédera de la même manière pour déterminer le second bord axial de la bande de roulement.

La figure 5 représente schématiquement des rainures axialement extérieures 24 dans une bande de roulement 2. L'homme de l'art détermine les profils principaux 241 et 242 des rainures, distants d'une distance W. Ces profils sont linéarisés en un profil linéaire moyen L par interpolation linéaire des profils selon la direction axiale **YY'.** Le point le plus axialement intérieur a et le point le plus axialement extérieur b du profil linéaire moyen L, définissent respectivement l'origine et l'extrémité du vecteur **ab.** Ces vecteurs permettent la définition des angles orientés C **(XX'** ; **ab)** des profils linéaires moyens que les rainures 24 forment avec la direction circonférentielle **XX'** sur les portions axialement extérieures gauche 22 et droite 23 de la bande de roulement. Les rainures peuvent être débouchantes comme la rainure 24A, borgnes comme la rainure 24C ou aveugles comme la rainure 24B.

La figure 6A illustre, pour un pneumatique sans sens de rotation préconisé, les cônes I des directions optimales du profil linéaire moyen L de toute rainure majeure axialement extérieure : un angle C optimal, entre l'axe circonférentiel et la direction du profil linéaire moyen L, appartient à [90+ (AA+AB)/2-30 ; 90+ (AA+AB)/2+30] mod (180). Un élément de renforcement d'une couche de travail à droite 411 est représenté avec ses extrémités ED faisant un angle orienté AA avec l'axe circonférentiel **XX',** et un élément de renforcement d'une couche de travail à gauche 421 faisant un angle orienté AB avec l'axe circonférentiel **XX'.** La médiatrice de ces deux angles (AA+AB)/2 permet de définir l'intervalle pour les angles optimaux pour les directions des profils moyens linéaires des rainures majeures extérieures autour de sa perpendiculaire (AA+AB)/2+90°, à plus ou moins 30°. Une rotation de la figure 6A de 180° n'a pas d'incidence sur sa représentation, le sens de rotation du pneumatique n'ayant pas d'influence.

La figure 6A' illustre la signification du cône I. Pour un profil L, d'extrémité axiale intérieure a, l'angle en a du cône vaut 60°, la médiatrice du cône fait un angle avec l'axe circonférentiel pour la portion gauche du pneumatique de (AA+AB)/2+90° et pour la portion droite de (AA+AB)/2-90°. Si l'extrémité axiale extérieure du profil moyen linéaire de la rainure, c1 ou c2, est telle que la direction ac1 ou ac2 n'est pas dans le cône alors la rainure ne vérifie pas les conditions de d'optimisation des rainures. Si l'extrémité axiale extérieure du profil moyen linéaire de la rainure, b1 ou b2, est telle que la direction ab1, ou ab2 est dans le cône alors la rainure vérifie les conditions de l'optimisation des rainures, non au sens de l'invention mais pour un pneumatique sans sens de rotation préconisé.

En adoptant un sens de rotation préconisé SR du pneumatique, il est possible d'optimiser davantage l'endurance, la figure 6B illustre les cônes optimaux IG et ID des directions des profils linéaires moyens L de toute rainure majeure axialement extérieure. Les angles des profils linéaires moyens L de toute rainure majeure axialement extérieure de la portion gauche (PG) du pneumatique avec l'axe circonférentiel XX', sont au moins égaux à 90°+ (AA+AB)/2, et au plus égaux à 90°+ (AA+AB)/2+30°. Les angles des profils linéaires moyens L de toute rainure majeure axialement extérieure de la portion droite du pneumatique avec l'axe circonférentiel XX', sont au plus égaux à -90°+ (AA+AB)/2, et au moins égaux à -90°+ (AA+AB)/2-30°. Dans ce cas, avec un sens de rotation préconisé, en suivant cette recommandation, l'extrémité E1G de l'élément de renforcement à gauche 421, entre toujours la première, en marche avant, dans les virages à haute accélération transversale dans l'aire de contact comparativement à l'extrémité E2G et de même l'extrémité E1D de l'élément de renforcement à droite, entre la première dans l'aire de contact comparativement à l'extrémité E2D. Une rotation de la figure 6B de 180° influence les positions des intervalles optimaux IG et IG, et donc des rainure vis-à-vis de l'entrée dans l'aire de contact.

La figure 7A illustre, vu de l'axe de rotation, l'effet d'un virage à gauche sur un élément de renforcement 411 d'une couche de travail à droite dans l'aire de contact. L'entrée de l'aire de contact est désignée par E, la sortie par S, et la direction d'avancement est DA. Le pneumatique soumis à un effort transverse, est mis en flexion. La zone de compression maximale ZCM dans la direction **XX',** est en sortie d'aire de contact sur la portion droite. L'extrémité E1D de l'élément de renforcement 411, entrée la première dans l'aire de contact et donc à proximité de la sortie, est bien à droite de l'extrémité 2ED. Celle-ci, entrée par la suite, est proche de l'entrée de l'aire de contact.

L'élément de renforcement considéré est soumis à un effort FY du sol sur le pneumatique, nul en entrée de l'aire de contact et augmentant au fur et à mesure du cisaillement de la bande de roulement pour atteindre un maximum et décroitre en raison du glissement en sortie d'aire de contact. Cet effort déforme l'élément de renforcement 411 en 411D, lui donnant une direction plus proche de **XX',** et générant un effort de rappel FYR croissant depuis l'entrée de l'aire de contact jusqu'à la zone de glissement en sortie d'aire de contact. En sortie d'aire de contact, l'effort du sol sur le pneumatique FY décroit en raison du glissement quand la force de rappel FYR due à la déformation du sommet et des éléments de renforcement est maximale, l'élément de renforcement revient donc rapidement en position en suivant une direction DS quasi perpendiculaire à la direction **XX',** direction de la compression de flexion. L'élément de renforcement ne reprend donc que très peu de compression et au niveau de cette couche de travail, les efforts de compression sont repris par le mélange caoutchouteux de la matrice. Ce n'est donc pas pour les éléments de renforcement des couches à droite qu'il faut optimiser la sculpture dans un virage à gauche.

Inversement, la figure 7B illustre, vu de l'axe de rotation, l'effet d'un même virage à gauche sur un élément de renforcement 421 d'une couche de travail à gauche dans l'aire de contact. L'extrémité E1G de l'élément de renforcement 421, entrée la première dans l'aire de contact, est sortie de l'aire de contact. Elle est bien à droite de l'extrémité E2D entrée par la suite et toujours dans l'aire de contact. Cet élément de renforcement est soumis à l'effort FY du sol sur le pneumatique, nul en entrée de l'aire de contact et augmentant au fur et à mesure du cisaillement de la bande de roulement pour atteindre un maximum et décroitre en raison du glissement en sortie d'aire de contact. Cet effort déforme l'élément de renforcement 421 en 421D, lui donnant une direction plus proche de YY', et générant un effort de rappel FYR croissant depuis l'entrée de l'aire de contact jusqu'à la zone de glissement en sortie d'aire de contact. En sortie d'aire de contact, l'effort FY du sol sur le pneumatique décroit quand l'effort de rappel FYR est maximal, l'élément de renforcement revient donc rapidement en position en faisant une direction DS quasi parallèle à la direction XX', direction de compression maximale due à la flexion du sommet sous l'effet de l'effort transversal. L'élément de renforcement reprend donc toute la compression. Pour éviter que les rainures majeures axialement extérieures de la partie droite PD, soient perpendiculaires à la déformée de l'élément de renforcement déformé et ne favorise ainsi son flambement, il faut que la perpendiculaire P411D de la déformée 411D au niveau de la zone de compression maximale n'appartienne pas au cône ID autorisé pour les vecteurs **ab** des profils linéaires moyens des rainures axialement extérieures. Donc pour éviter le flambement des éléments de renforcement de cette couche de travail, il convient donc que sur la portion droite du pneumatique, les vecteurs **ab** des profils linéaires moyens des rainures axialement extérieures aient avec l'axe circonférentiel **XX'** un angle orienté C' au plus égal à -90°+(AA+AB)/2, et au moins égal à (-90°+(AA+AB)/2))-30°, soit-120°+(AA+AB/2).

Un raisonnement analogue permet, pour un virage à droite, de déterminer l'angle optimal des rainures axialement extérieures de la portion gauche du pneumatique pour préserver du flambement les éléments de renforcement de la couche de travail à droite. Il convient donc que sur la portion gauche du pneumatique, les vecteurs **ab** des profils linéaires moyens des rainures axialement extérieures aient avec l'axe circonférentiel **XX'** un angle orienté C appartenant à IG, c'est-à-dire au moins égal à 90°+(AA+AB)/2, et au plus égal à 90°+(AA+AB)/2+30°, soit 120°+(AA+AB)/2.

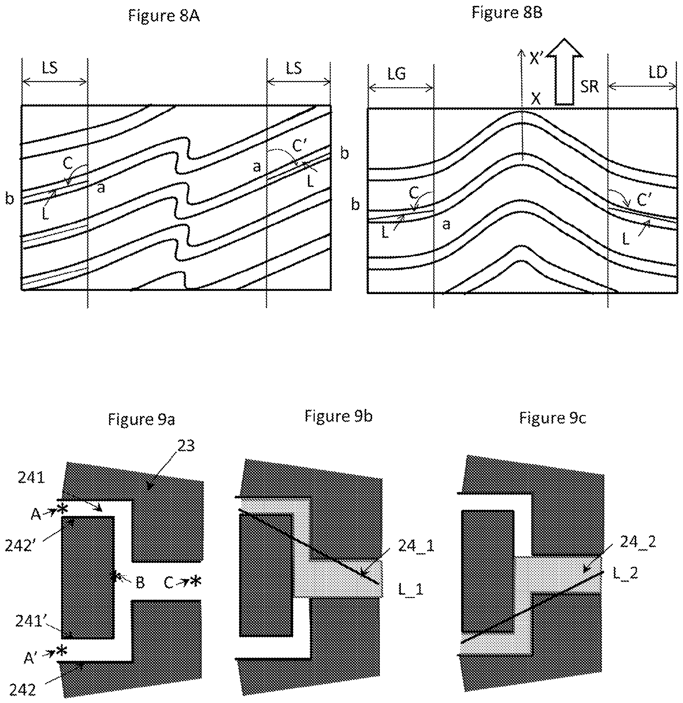

Les figures 9A, 9B, 9C illustrent une méthode de détermination des rainures majeures dans le cas d'un réseau de rainures. Pour certaines sculptures, des rainures sont débouchantes dans d'autres rainures comme l'illustre la figure 9A. Dans ce cas on déterminera les faces latérales du réseau qui sont les faces latérales continues les plus circonférentiellement éloignées l'une de l'autre du réseau de rainures, dans le cas présent les faces latérales 241 et 242. On appliquera l'invention à toutes les rainures ayant pour faces latérales une des faces latérales du réseau et la face latérale opposée directement adjacente. On considérera donc ici la rainure 24_1 (Figure 9B), de profil moyen linéaire L_1, constituée par la face latérale du réseau 241 et la face latérale opposée directement adjacente à (241, 242'), sur une première portion à partir du point A jusqu'au point B, et par la face latérale du réseau 241 et la face latérale 242 opposée directement adjacente à 241, sur une deuxième portion à partir du point B jusqu'au point C. Puis on considérera la rainure 24_2 (Figure 9C), de profil moyen linéaire L_2, constituée par la face latérale du réseau 242 et la face latérale 241'opposée directement adjacente à 242, sur une première portion à partir du point A jusqu'au point B, et par la face latérale du réseau 242 et la face latérale 241 opposée directement adjacente à 242, sur une deuxième portion à partir du point B jusqu'au point C. Pour des réseaux plus complexes, on généralisera cette règle de manière à ce que l'ensemble des rainures majeures possibles du réseau sensiblement dans l'orientation des faces latérales du réseau vérifient les caractéristiques de l'invention.

Les inventeurs ont réalisé des calculs sur la base de l'invention pour un pneumatique de dimension 205/55 R16, gonflé à une pression de 2 bars, comprenant deux couches de travail comprenant des monofilaments en acier, de diamètre 0.3 mm, répartis selon une densité de 158 monofilaments au dm et formant, avec la direction circonférentielle, les angles A1 et A2 respectivement égaux à +27° et -27°. Les monofilaments ont une résistance à la rupture Rₘ égale à 3500 MPa et les couches de travail ont chacune une résistance à rupture R_{c} égale à 39 000 N/dm. Le pneumatique comporte des rainures majeures axialement extérieures de type borgne d'une profondeur de 6.5 mm, sur les deux portions axialement extérieures de la bande de roulement du pneumatique ayant une largeur axiale égale à 0.21 fois la largeur axiale de la bande de roulement, réparties selon un pas circonférentiel de 30 mm. La distance radiale D1 entre la face de fond des rainures majeures axialement extérieures et l'armature de sommet est au moins égale à 2 mm.

Différents pneumatiques ont été calculés et testés en faisant varier les angles C et C' du profil linéaire moyen des rainures majeures axialement extérieures avec la direction circonférentielle respectivement sur les portions gauche et droite du pneumatique :
- Le pneumatique A, selon l'invention, caractérisé par des angles C et C' du profil linéaire moyen des rainures majeures axialement extérieures avec la direction circonférentielle **XX',** respectivement sur la portion gauche et sur la portion droite de la bande de roulement, égaux respectivement à 90° et -90°
- Le pneumatique B, selon l'invention, caractérisé par des angles C et C' respectivement égaux à 120° et -120°.
- Le pneumatique C, hors l'invention, caractérisé par des angles C et C' respectivement égaux à 60° et -60°.

Les conditions de calcul reproduisent les conditions de roulage d'un pneumatique avant côté extérieur du virage, c'est-à-dire de celui qui est le plus sollicité sur un véhicule de tourisme. Ces sollicitations, pour une accélération latérale de 0.7g, sont les suivantes : une charge (Fz) de 749 daN, un effort latéral (Fy) de 509 daN et un carrossage de 3.12° correspondant à un virage à gauche. Le tableau suivant donne le maximum des sollicitations en flexion dans les monofilaments en fonction du pneumatique sur la couche de travail à gauche qui est la couche de travail la plus sollicitée sur un virage à gauche. Ces maxima sont rapportés à la valeur déterminée pour le pneumatique A selon l'invention. Les pneumatiques calculés ont été roulés sur un volant de 8.5 m selon les mêmes conditions et le roulage a été arrêté régulièrement pour une mesure non destructive afin de contrôler la présence de ruptures des éléments de renforcement des couches de travail. Le kilométrage effectué avant la rupture des monofilaments d'une couche de travail, ici la couche de travail à gauche est donné dans le tableau I suivant.

**Tableau I**

| Pneumatique | A (selon l'invention) | B (selon l'invention) | C (hors invention) |
|---|---|---|---|
| Angle de C et C' | 90° et -90° | 120° et -120° | 60 et -60° |
| Contrainte de flexion maximale (Base 100) par calcul | 100 | 98 | 166 |
| Kilométrage à rupture (Base 100) par calcul | 100 | 100 | 65 |

Par calcul, le minimum de contrainte de flexion est atteint pour les pneumatiques A et B selon l'invention. En test sur pneumatique, le kilométrage maximal avant rupture de monofilaments de la couche de travail à gauche est également atteint pour les pneumatiques A et B selon l'invention. Le pneumatique C, en dehors de l'invention, a un kilométrage à rupture significativement inférieur.

Deux pneumatique A' et B' de même dimension 205/55 R16, de même architecture que les pneumatiques A et B et de motifs de sculpture identiques entre eux aux angles C et C' près, ont également été testés selon la même procédure, simulant selon le cas un virage à gauche et un virage à droite :
- A', selon l'invention, est tel que les vecteurs **ab** de tout profil linéaire moyen L de toute rainure majeure axialement extérieure respectivement de la portion gauche et de la portion droite axialement extérieure de la bande de roulement, forment avec la direction circonférentielle **(XX')** du pneumatique, des angles orientés C et C' égaux respectivement à 102° et -102°
- B', hors l'invention, est tel que les vecteurs **ab** de tout profil linéaire moyen L de toute rainure majeure axialement extérieure respectivement de la portion gauche et de la portion droite axialement extérieure de la bande de roulement, forment avec la direction circonférentielle **(XX')** du pneumatique, des angles orientés C et C' égaux respectivement à 78° et -78°

Le roulage sur volant a été arrêté régulièrement pour une mesure non destructive afin de contrôler la présence de ruptures des éléments de renforcement de la couche de travail la plus sollicitée, du pneumatique selon le sens du virage. Le kilométrage atteint avant l'apparition de rupture de monofilament est donné dans le tableau II suivant en base 100 par rapport au kilométrage effectué par le pneumatique A' selon l'invention dont la performance en endurance est dans les deux cas supérieure quel que soit le sens du virage.

**Tableau II**

| Kilométrage avant apparition d'une rupture de monofilament en base 100 | A' (selon l'invention) | B' (hors invention) |
|---|---|---|
| Virage à droite | 100 | 65 |
| Virage à gauche | 100 | 50 |

## Revendications

1. Pneumatique (1) pour véhicule de tourisme, destiné à être monté sur une jante selon un sens de rotation (SR) préconisé orientant une direction circonférentielle **(XX'),** comprenant :
• par rapport à la direction circonférentielle **(XX')** orientée selon le sens de rotation préconisé (SR), une partie gauche (PG) et une partie droite (PD) s'étendant axialement et symétriquement à partir d'un plan circonférentiel médian (XX', ZZ'), passant par le milieu d'une bande de roulement (2) du pneumatique (1), destinée à entrer en contact avec un sol par l'intermédiaire d'une surface de roulement (21), et perpendiculaire à un axe de rotation du pneumatique **(YY'),**
• la bande de roulement (2) comprenant deux portions axialement extérieures (22, 23), respectivement appartenant à la partie gauche (PG) et la partie droite (PD) du pneumatique, ayant respectivement une largeur axiale (LG, LD) au plus égale à 0.3 fois la largeur axiale LT de la bande de roulement,
• le pneumatique (1) comprenant en outre une armature de sommet (3) radialement intérieure à la bande de roulement (2), comprenant une armature de travail (4) et une armature de frettage (5),
• l'armature de travail (4) comprenant au moins deux couches de travail (41, 42), comprenant chacune des éléments de renforcement (411, 421) enrobés par un matériau élastomérique, parallèles entre eux et formant respectivement avec une direction circonférentielle **(XX')** du pneumatique, deux angles orientés AA et AB dans le sens trigonométrique au moins égal à 20° et au plus égal à 50° en valeur absolue et de signe opposé d'une couche à la suivante,
• les dits éléments de renforcement de chaque couche de travail étant constitués par des fils métalliques unitaires ou monofilaments ayant une section S dont la plus petite dimension est au moins égale à 0.20 mm et au plus égale à 0.5 mm, une résistance à la rupture Rm
• la densité d de monofilaments de chaque couche de travail étant au moins égale à 100 fils par dm et au plus égale à 200 fils par dm,
• l'armature de frettage (5) comprenant au moins une couche de frettage comprenant des éléments de renforcement, parallèles entre eux et formant, avec la direction circonférentielle **(XX')** du pneumatique, un angle au plus égal à 10° en valeur absolue,
• la résistance à rupture Rc de chaque couche de travail (41, 42) est au moins égale à 30 000 N/dm, Rc étant définie par : Rc= Rm*S*d, où Rm est la résistance à la rupture en traction des monofilaments en MPa, S la section des monofilaments en mm² et d la densité de monofilaments de la couche de travail considérée, en nombre de monofilaments par dm,
**caractérisé en ce que,**
• au moins une portion axialement extérieure (22, 23) de la bande de roulement (2) comprend des rainures axialement extérieures (24), une rainure axialement extérieure (24) formant un espace débouchant sur la surface de roulement (21) et étant délimitée par au moins deux faces latérales principales (241, 242) reliées par une face de fond (243),
• au moins une rainure axialement extérieure (24) dite majeure a une largeur W, définie par la distance entre les deux faces latérales principales (241, 242), au moins égale à 1 mm, une profondeur D, définie par la distance radiale maximale entre la surface de roulement (21) et la face de fond (243), au moins égale à 5 mm, et un profil moyen linéaire L, ayant un point (a) le plus axialement intérieur et un point (b) le plus axialement extérieur, définissant le vecteur (ab) du profil moyen linéaire L,
le vecteur **(ab)** de tout profil linéaire moyen L de toute rainure majeure axialement extérieure (24) de la portion gauche axialement extérieure (23) de la bande de roulement (2) forme, avec la direction circonférentielle **(XX')** du pneumatique, un angle orienté C **(XX'** ; **ab)** au moins égal à (85°+ (AA+AB)/2), et
le vecteur **(ab)** de tout profil linéaire moyen L de toute rainure majeure axialement extérieure (24) de la portion droite axialement extérieure (22) de la bande de roulement (2) forme, avec la direction circonférentielle **(XX')** du pneumatique, un angle orienté C' **(XX'** ; **ab)** au plus égal à (- 85°+ (AA+AB)/2)).

2. Pneumatique selon la revendication 1 **dans lequel** le vecteur **(ab)** de tout profil linéaire moyen L de toute rainure majeure axialement extérieure (24) de la portion gauche axialement extérieure (23) de la bande de roulement (2) forme, avec la direction circonférentielle **(XX')** du pneumatique, un angle orienté C **(XX'; ab)** au moins égal à (90°+(AA+AB)/2), et au plus égal à (120°+(AA+AB)/2), et le vecteur **ab** de tout profil linéaire moyen L de toute rainure majeure axialement extérieure (24) de la portion droite axialement extérieure (22) de la bande de roulement (2) forme, avec la direction circonférentielle (XX') du pneumatique, un angle orienté C' **(XX'** ; **ab)** au plus égal à (-90°+(AA+AB)/2)), et au moins égal à (-120°+(AA+AB)/2)).

3. Pneumatique selon l'une des revendications 1 ou 2 **dans lequel** toute rainure majeure axialement extérieure (24) a une largeur W au plus égale à 10 mm.

4. Pneumatique selon l'une quelconque des revendications 1 à 3 **dans lequel** toute rainure majeure axialement extérieure (24) a une profondeur D au plus égale à 8 mm.

5. Pneumatique selon l'une quelconque des revendications 1 à 4 **dans lequel** les rainures majeures axialement extérieures (24) sont espacées, selon la direction circonférentielle (XX') du pneumatique, d'un pas circonférentiel P au moins égal à 8 mm, de préférence au plus égal à 50 mm..

6. Pneumatique selon l'une quelconque des revendications 1 à 5 **dans lequel** la face de fond (243) d'une rainure majeure axialement extérieure (24) est positionnée radialement à l'extérieur de l'armature de sommet (3) à une distance radiale D1 au moins égale à 1.5 mm, de préférence au plus égale à 3.5 mm.

7. Pneumatique selon l'une quelconque des revendications 1 à 5 **dans lequel** au moins une portion axialement extérieure (22, 23), comprenant des rainures majeures axialement extérieures (24), comprend des incisions (25) ayant une largeur W1 au plus égale à 1 mm.

8. Pneumatique selon l'une quelconque des revendications 1 à 7 **dans lequel** les deux portions axialement extérieures (22, 23) ont respectivement une largeur axiale (LG, LD) au plus égale à 0.2 fois la largeur axiale LT de la bande de roulement (2).

9. Pneumatique selon l'une quelconque des revendications 1 à 8 **dans lequel** les angles (AA, AB) des éléments de renforcements (411, 421) des couches de travail (41,42) sont égaux en valeur absolue.

10. Pneumatique selon l'une quelconque des revendications 1 à 9 **dans lequel** chaque couche de travail (41, 42) comprend des éléments de renforcement (411, 421), formant, avec la direction circonférentielle (XX') du pneumatique, un angle (AA, AB) au moins égal à 22° et au plus égal à 35° en valeur absolue.

11. Pneumatique selon l'une quelconque des revendications 1 à 10 **dans lequel** chaque couche de travail (41, 42) comprend des éléments de renforcement (411, 421), constitués par des fils métalliques unitaires ou monofilaments ayant un diamètre au moins égal à 0.3 mm et au plus égal à 0.37 mm.

12. Pneumatique selon l'une quelconque des revendications 1 à 11 **dans lequel** les éléments de renforcement des couches de travail (41, 42) sont en acier, de préférence en acier au carbone.

13. Pneumatique selon l'une quelconque des revendications 1 à 12 **dans lequel** la densité de monofilaments de chaque couche de travail est au moins égale à 120 fils par dm et au plus égale à 180 fils par dm.

14. Pneumatique selon l'une quelconque des revendications 1 à 13 **dans lequel** les éléments de renforcement de la au moins une couche de frettage sont en textile, de préférence de type polyamide aliphatique, polyamide aromatique, combinaison de polyamide aliphatique et de polyamide aromatique, polytéréphtalate d'éthylène ou rayonne.

15. Pneumatique selon l'une quelconque des revendications 1 à 14 **dans lequel** l'armature de frettage (5) est radialement extérieure à l'armature de travail (4).

## Patentansprüche

1. Reifen (1) für einen Personenkraftwagen, welcher dazu bestimmt ist, auf einer Felge in einer empfohlenen Drehrichtung (SR) montiert zu werden, wodurch eine Umfangsrichtung **(XX')** ausgerichtet wird, umfassend:
• bezogen auf die Umfangsrichtung **(XX'),** die gemäß der empfohlenen Drehrichtung (SR) ausgerichtet ist, einen linken Teil (PG) und einen rechten Teil (PD), die sich axial und symmetrisch von einer äquatorialen Mittelebene (XX', ZZ') aus erstrecken, die durch die Mitte eines Laufstreifens (2) des Reifens (1) verläuft, der dazu bestimmt ist, über eine Lauffläche (21) mit einem Boden in Kontakt zu kommen, und die senkrecht zu einer Drehachse des Reifens **(YY')** ist,
• wobei der Laufstreifen (2) zwei axial äußere Abschnitte (22, 23) umfasst, die zum linken Teil (PG) bzw. rechten Teil (PD) des Reifens gehören und jeweils eine axiale Breite (LG, LD) aufweisen, die höchstens gleich dem 0,3-Fachen der axialen Breite LT des Laufstreifens ist,
• wobei der Reifen (1) außerdem eine Scheitelbewehrung (3) umfasst, die sich radial innerhalb des Laufstreifens (2) befindet und eine Arbeitsbewehrung (4) und eine Umhüllungsbewehrung (5) umfasst,
• wobei die Arbeitsbewehrung (4) mindestens zwei Arbeitsschichten (41, 42) umfasst, die jeweils Verstärkungselemente (411, 421) umfassen, die in ein Elastomermaterial eingebettet sind, parallel zueinander sind und mit einer Umfangsrichtung **(XX')** des Reifens zwei entgegen dem Uhrzeigersinn orientierte Winkel AA bzw. AB bilden, die dem absoluten Betrag nach mindestens gleich 20° und höchstens gleich 50° sind und entgegengesetzte Vorzeichen von einer Schicht zur folgenden aufweisen,
• wobei diese Verstärkungselemente jeder Arbeitsschicht aus einzelnen Metalldrähten oder Monofilamenten bestehen, die einen Querschnitt S, dessen kleinste Abmessung mindestens gleich 0,20 mm und höchstens gleich 0,5 mm ist, und eine Bruchfestigkeit Rm aufweisen,
• wobei die Dichte d der Monofilamente jeder Arbeitsschicht mindestens gleich 100 Drähte pro dm und höchstens gleich 200 Drähte pro dm ist,
• wobei die Umhüllungsbewehrung (5) mindestens eine Umhüllungsschicht umfasst, die Verstärkungselemente umfasst, die zueinander parallel sind und mit der Umfangsrichtung **(XX')** des Reifens einen Winkel bilden, der dem absoluten Betrag nach höchstens gleich 10° ist,
• wobei die Bruchfestigkeit R_{c} jeder Arbeitsschicht (41, 42) mindestens gleich 30 000 N/dm ist, wobei Rc durch Rc = Rm*S*d definiert ist, wobei Rm die Zugfestigkeit der Monofilamente in MPa, S der Querschnitt der Monofilamente in mm² und d die Dichte der Monofilamente der betrachteten Arbeitsschicht, als Anzahl der Monofilamente pro dm, ist, **dadurch gekennzeichnet, dass**
• mindestens ein axial äußerer Abschnitt (22, 23) des Laufstreifens (2) axial äußere Rillen (24) umfasst, wobei eine axial äußere Rille (24) einen Raum bildet, der auf der Lauffläche (21) mündet und von mindestens zwei seitlichen Hauptflächen (241, 242) begrenzt wird, die durch eine Bodenfläche (243) verbunden sind,
• wobei mindestens eine axial äußere, sogenannte größere Rille (24) eine durch den Abstand zwischen den zwei seitlichen Hauptflächen (241, 242) definierte Breite W, die mindestens gleich 1 mm ist, eine durch den maximalen radialen Abstand zwischen der Lauffläche (21) und der Bodenfläche (243) definierte Tiefe D, die mindestens gleich 5 mm ist, und ein geradliniges mittleres Profil L mit einem axial innersten Punkt (a) und einem axial äußersten Punkt (b), das den Vektor (**ab**) des geradlinigen mittleren Profils L definiert, aufweist,
wobei der Vektor (**ab**) jedes mittleren geradlinigen Profils L jeder axial äußeren größeren Rille (24) des axial äußeren linken Abschnitts (23) des Laufstreifens (2) mit der Umfangsrichtung **(XX')** des Reifens einen orientierten Winkel C **(XX'; ab)** bildet, der mindestens gleich (85°+(AA+AB)/2) ist, und wobei der Vektor (**ab**) jedes mittleren geradlinigen Profils L jeder axial äußeren größeren Rille (24) des axial äußeren rechten Abschnitts (22) des Laufstreifens (2) mit der Umfangsrichtung **(XX')** des Reifens einen orientierten Winkel C' **(XX'; ab)** bildet, der höchstens gleich (-85°+(AA+AB)/2) ist.

2. Reifen nach Anspruch 1, wobei der Vektor (**ab**) jedes mittleren geradlinigen Profils L jeder axial äußeren größeren Rille (24) des axial äußeren linken Abschnitts (23) des Laufstreifens (2) mit der Umfangsrichtung **(XX')** des Reifens einen orientierten Winkel C **(XX'; ab)** bildet, der mindestens gleich (90°+(AA+AB)/2) und höchstens gleich (120°+(AA+AB)/2) ist, und der Vektor **ab** jedes mittleren geradlinigen Profils L jeder axial äußeren größeren Rille (24) des axial äußeren rechten Abschnitts (22) des Laufstreifens (2) mit der Umfangsrichtung (XX') des Reifens einen orientierten Winkel C' **(XX'; ab)** bildet, der höchstens gleich (-90°+(AA+AB)/2) und mindestens gleich (-120°+(AA+AB)/2) ist.

3. Reifen nach einem der Ansprüche 1 oder 2, wobei jede axial äußere größere Rille (24) eine Breite W aufweist, die höchstens gleich 10 mm ist.

4. Reifen nach einem der Ansprüche 1 bis 3, wobei jede axial äußere größere Rille (24) eine Tiefe D aufweist, die höchstens gleich 8 mm ist.

5. Reifen nach einem der Ansprüche 1 bis 4, wobei die axial äußeren größeren Rillen (24) in der Umfangsrichtung (XX') des Reifens gemäß einer Umfangsteilung P beabstandet sind, die mindestens gleich 8 mm, vorzugsweise höchstens gleich 50 mm ist.

6. Reifen nach einem der Ansprüche 1 bis 5, wobei die Bodenfläche (243) einer axial äußeren größeren Rille (24) radial außerhalb der Scheitelbewehrung (3) positioniert ist, in einem radialen Abstand D1, der mindestens gleich 1,5 mm und vorzugsweise höchstens gleich 3,5 mm ist.

7. Reifen nach einem der Ansprüche 1 bis 5, wobei mindestens ein axial äußerer Abschnitt (22, 23), der axial äußere größere Rillen (24) umfasst, Einschnitte (25) mit einer Breite W1 umfasst, die höchstens gleich 1 mm ist.

8. Reifen nach einem der Ansprüche 1 bis 7, wobei die zwei axial äußeren Abschnitte (22, 23) jeweils eine axiale Breite (LG, LD) aufweisen, die höchstens gleich dem 0,2-Fachen der axialen Breite LT des Laufstreifens (2) ist.

9. Reifen nach einem der Ansprüche 1 bis 8, wobei die Winkel (AA, AB) der Verstärkungselemente (411, 421) der Arbeitsschichten (41, 42) dem absoluten Betrag nach gleich sind.

10. Reifen nach einem der Ansprüche 1 bis 9, wobei jede Arbeitsschicht (41, 42) Verstärkungselemente (411, 421) umfasst, die mit der Umfangsrichtung (XX') des Reifens einen Winkel (AA, AB) bilden, der dem absoluten Betrag nach mindestens gleich 22° und höchstens gleich 35° ist.

11. Reifen nach einem der Ansprüche 1 bis 10, wobei jede Arbeitsschicht (41, 42) Verstärkungselemente (411, 421) umfasst, die aus einzelnen Metalldrähten oder Monofilamenten bestehen, die einen Durchmesser aufweisen, der mindestens gleich 0,3 mm und höchstens gleich 0,37 mm ist.

12. Reifen nach einem der Ansprüche 1 bis 11, wobei die Verstärkungselemente der Arbeitsschichten (41, 42) aus Stahl bestehen, vorzugsweise aus Kohlenstoffstahl.

13. Reifen nach einem der Ansprüche 1 bis 12, wobei die Dichte der Monofilamente jeder Arbeitsschicht mindestens gleich 120 Drähte pro dm und höchstens gleich 180 Drähte pro dm ist.

14. Reifen nach einem der Ansprüche 1 bis 13, wobei die Verstärkungselemente der mindestens einen Umhüllungsschicht aus Textilmaterial bestehen, vorzugsweise vom Typ aliphatisches Polyamid, aromatisches Polyamid, Kombination von aliphatischem Polyamid und aromatischem Polyamid, Polyethylenterephthalat oder Viskosefilamentgarn.

15. Reifen nach einem der Ansprüche 1 bis 14, wobei sich die Umhüllungsbewehrung (5) radial außerhalb der Arbeitsbewehrung (4) befindet.

## Claims

1. Tyre (1) for a passenger vehicle, intended to be mounted on a rim in a recommended direction of rotation (SR) orientating a circumferential direction (XX'), comprising:
• with respect to the circumferential direction (XX') oriented in the recommended direction of rotation (SR), a left-hand part (PG) and a right-hand part (PD) extending axially and symmetrically from a circumferential median plane (XX', ZZ'), passing through the middle of a tread (2) of the tyre (1), intended to come into contact with the ground via a tread surface (21), and perpendicular to an axis of rotation of the tyre **(YY'),**
• the tread (2) comprising two axially exterior portions (22, 23), belonging respectively to the left-hand part (PG) and to the right-hand part (PD) of the tyre, each respectively having an axial width (LG, LD) at most equal to 0.3 times the tread axial width LT,
• the tyre (1) further comprising a crown reinforcement (3) radially on the inside of the tread (2), and comprising a working reinforcement (4) and a hoop reinforcement (5),
• the working reinforcement (4) comprising at least two working layers (41, 42) each comprising reinforcing elements (411, 421) which are coated in an elastomeric material, mutually parallel and respectively form, with a circumferential direction **(XX')** of the tyre, two oriented angles AA and AB in the counterclockwise direction at least equal to 20° and at most equal to 50°, in terms of absolute value, and of opposite sign from one layer to the next,
• the said reinforcing elements in each working layer being made up of individual metal threads or monofilaments having a cross section S the smallest dimension of which is at least equal to 0.20 mm and at most equal to 0.5 mm, and a breaking strength Rm,
• the density d of monofilaments in each working layer being at least equal to 100 threads per dm and at most equal to 200 threads per dm,
• the hoop reinforcement (5) comprising at least one hooping layer comprising reinforcing elements which are mutually parallel and form, with the circumferential direction **(XX')** of the tyre, an angle at most equal to 10°, in terms of absolute value,
• the breaking strength R_{c} of each working layer (41, 42) is at least equal to 30 000 N/dm, Rc being defined by: Rc= Rm*S*d, where Rm is the tensile breaking strength of the monofilaments in MPa, S is the cross-sectional area of the monofilaments in mm² and d is the density of monofilaments in the working layer considered, in number of monofilaments per dm,
**characterized in that,**
• at least one axially exterior portion (22, 23) of the tread (2) comprises axially exterior grooves (24), an axially exterior groove (24) forming a space opening onto the tread surface (21) and being delimited by at least two main lateral faces (241, 242) connected by a bottom face (243),
• at least one axially exterior groove open (24), referred to as major groove, has a width W, defined by the distance between the two main lateral faces (241, 242), at least equal to 1 mm, a depth D, defined by the maximum radial distance between the tread surface (21) and the bottom face (243), at least equal to 5 mm, and a mean linear profile L, having an axially innermost point (a) and an axially outermost point (b) which define the vector **(ab)** of the mean linear profile L,
the vector **(ab)** of any mean linear profile L of any axially exterior major groove (24) of the left-hand axially exterior portion (23) of the tread (2) forms, with the circumferential direction **(XX')** of the tyre, an oriented angle C **(XX'; ab)** at least equal to (85°+ (AA+AB)/2), and
the vector **(ab)** of any mean linear profile L of any axially exterior major groove (24) of the right-hand axially exterior portion (22) of the tread (2) forms, with the circumferential direction **(XX')** of the tyre, an oriented angle C' **(XX'; ab)** at most equal to (-85°+ (AA+AB)/2)).

2. Tyre according to Claim 1, **wherein** the vector **(ab)** of any mean linear profile L of any axially exterior major groove (24) of the left-hand axially exterior portion (22) of the tread (2) forms, with the circumferential direction **(XX')** of the tyre, an oriented angle C **(XX'; ab)** at least equal to (90°+(AA+AB)/2), and at most equal to (120°+(AA+AB)/2), and the vector **(ab)** of any mean linear profile L of any axially exterior major groove (24) of the right-hand axially exterior portion (23) of the tread (2) forms, with the circumferential direction **(XX')** of the tyre, an oriented angle C' **(XX'; ab)** at most equal to (-90°+(AA+AB)/2), and at least equal to (-120°+(AA+AB)/2).

3. Tyre according to either one of Claims 1 and 2 **wherein** any axially exterior major groove (24) has a width W at most equal to 10 mm.

4. Tyre according to any one of Claims 1 to 3 **wherein** any axially exterior major groove (24) has a depth D at most equal to 8 mm.

5. Tyre according to any one of Claims 1 to 4 **wherein** the axially exterior major grooves (24) are spaced apart, in the circumferential direction (XX') of the tyre, by a circumferential spacing P at least equal to 8 mm, preferably at most equal to 50 mm.

6. Tyre according to any one of Claims 1 to 5 **wherein** the bottom face (243) of an axially exterior major groove (24) is positioned radially on the outside of the crown reinforcement (3) at a radial distance D1 at least equal to 1.5 mm, preferably at most equal to 3.5 mm.

7. Tyre according to any one of Claims 1 to 5, **wherein** at least one axially exterior portion (22, 23), comprising axially exterior major grooves (24), comprises sipes (25) having a width W1 at most equal to 1 mm.

8. Tyre according to any one of Claims 1 to 7 **wherein** the two axially exterior portions (22, 23) each have an axial width (LG, LD) at most equal to 0.2 times the axial width LT of the tread (2).

9. Tyre according to any one of Claims 1 to 8 **wherein** the angles (AA, AB) of the reinforcing elements (411, 421) of the working layers (41, 42) are equal in terms of absolute value.

10. Tyre according to any one of Claims 1 to 9 **wherein** each working layer (41, 42) comprises reinforcing elements (411, 421) which form, with the circumferential direction (XX') of the tyre, an angle (AA, AB) at least equal to 22° and at most equal to 35° in terms of absolute value.

11. Tyre according to any one of Claims 1 to 10 **wherein** each working layer (41, 42) comprises reinforcing elements (411, 421) made up of individual metal threads or monofilaments having a diameter at least equal to 0.3 mm and at most equal to 0.37 mm.

12. Tyre according to any one of Claims 1 to 11 **wherein** the reinforcing elements of the working layers (41, 42) are made of steel, preferably carbon steel.

13. Tyre according to any one of Claims 1 to 12 **wherein** the density of reinforcing elements in each working layer is at least equal to 120 threads per dm and at most equal to 180 threads per dm.

14. Tyre according to any one of Claims 1 to 13 **wherein** the reinforcing elements of the at least one hooping layer are made of textile, preferably of aliphatic polyamide, aromatic polyamide or combination of aliphatic polyamide and of aromatic polyamide, polyethylene terephthalate or rayon type.

15. Tyre according to any one of Claims 1 to 14 **wherein** the hoop reinforcement (5) is radially on the outside of the working reinforcement (4).
